# EUROPEAN PATENT SPECIFICATION

(11) **EP 2 373 882 B1**
(45) Date of publication and mention of the grant of the patent: **10.07.2013**
(21) Application number: 09825626.6
(22) Date of filing: 11.12.2009
(51) Int. Cl.: F03B 13/18

(54) **A WAVE POWER PLANT**
WELLENENERGIEANLAGE
CENTRALE HOULOMOTRICE

(30) Priority: 11.12.2008 NO 20085166
(43) Date of publication of application: 12.10.2011
(73) Proprietor: Fobox AS, 0107 Oslo (NO); Robert Bosch GmbH, 70469 Stuttgart (DE)
(72) Inventor: TJENSVOLL, Gaute, NO-0778 Oslo (NO); BAKKEN, Jonas Sjolte, 7052 TRONDHEIM (NO); LANGENSTEIN, Christian, DE-63846 Laufach (DE); BRUBAK, Tor, 1592 Valer (NO); SCHARMANN, Nik, DE-97082 Würzburg (DE); ZIMMERMANN, Stefan, DE-97753 Karlstad (DE); EGGEN, Kjell, Tore, NO-0691 Oslo (NO)
(74) Representative: Tofting, Arild
(86) International application number: PCT/IB2009/056067
(87) International publication number: WO 2010/067341

(56) References cited:
- EP-A1- 1 342 916
- WO-A1-2005/054668
- WO-A1-2009/129560
- WO-A2-2010/044674
- WO-A2-2010/044675
- US-A- 3 567 953
- US-A1- 2008 217 921

## Description

The present invention relates to a wave power plant according to the preamble of the subsequent claim 1.

Over the last years many attempts have been made to develop devices for harvesting of wave energy. The challenges for such devices are many and can be summarised as follows:
- To develop a device which, when all costs (production, maintenance and operation) are included, can produce energy at a competitive price. This means that the device must be simple and cheap.
- To achieve sufficient operating reliability. Very variable weather conditions at sea lead to the device being subjected to much stress. The device must be able to withstand at least one twenty-year storm without significant damage occurring.
- To be able to deliver energy with considerable regularity. This means that the device must be able to deliver energy from both small and large waves over a wide spectrum of amplitudes and frequencies.

A principle for generation of wave power is known from EP 1295031. This device uses two bodies that are set up to move in relation to each other. In this case, there is a centrally floating body which is surrounded by a ring-formed floating body. Each of the bodies is connected via a rod to submerged bodies which are set up to catch partly sea water and partly air. Thereby, the submerged bodies constitute a virtual mass. By adapting the virtual mass, one aims to get the two floating bodies to swing in different phases and thereby move in relation to each other.

It has been shown to be difficult to get the two bodies to swing in anti-phase and thereby achieve sufficient energy yield. The wave frequency varies over time and this means that the two bodies will, in many cases, swing more or less in the same phase.

To get the two bodies to swing in anti-phase the largest body must be at least twice as heavy as the smallest. If, in this way, one succeeds in getting the two bodies to swing in anti-phase, one will still not be able to achieve larger energy yield than what the smallest of the bodies is capable of producing. Therefore, the energy yield is very limited in such a system where the two bodies swing relatively freely in relation to each other. Furthermore, the known device is very complicated to produce, something which increases costs per kilowatt.

The ES 2193821 is a device of two buoys, one central buoy which is anchored to the ocean bed and a ring-formed buoy which floats and is connected to the central buoy via a remote transmission.

The central buoy is anchored to the ocean bed to limit its movements. The movements of the central buoy are thereby slow in relation to the ring buoy. This means that the central buoy will partly move together with, and partly move in anti-phase with, the ring buoy. Furthermore, the movement of the central buoy will vary with varying tides. At low ebb, it will move more with the waves than at high tides. The more the central buoy moves, the lower the efficiency of the power installation is. In addition, in strong currents the buoy is pulled sideways in relation to its anchorage point on the ocean bed. Thereby, the central buoy will be lying somewhat lopsided in the water, which the ring buoy will thereby also do. In addition to such a lopsided position in the water in itself leading to further reduced efficiency, the friction between the ring buoy and the central buoy will also increase.

The fact that the central buoy is hermetically sealed against entry of water means that it will float as a cork and very small sideways forces are required before the central buoy comes into a considerably lopsided position.

US 5,359,229 describes a wave power plant where a number of floating bodies are arranged to move on a rod. Furthermore, to each body is attached a wire that stretches across a drum that is arranged at the upper end of the rod so that it can rotate. A counter weight is fixed to the opposite end of the wire. When the body moves down along the rod, the wire will make the drum rotate. When the body moves up along the rod the counterweight will pull the drum round the opposite way. A ratchet connection ensures that the rotation of the drum is transferred to a drive shaft only when the drum rotates the one way.

A similar system is shown in U.S. 5,424,582. U.S. 1,267,733 also shows a system that is based on many of the same principles.

This wave power plant is very complicated and comprises many parts which, to some extent, must move a lot in relation to each other. As the drum only transmits power to the drive shaft when it rotates in the one direction, the power supply will be very variable. To compensate for this the wave power plant comprises many floating bodies, which are expected to move out of step. This further contributes to complicate the power plant. It is also known to place a drum either on the seabed or on land, where a wire at its one end is spooled onto the drum, and at its other end is connected to a floating body. Examples of this are GR1003391, SU 1373856, U.S. 7,045,912, U.S. 4,228,360 and N0325878.

The disadvantages of placing the drum on the ocean bed are that the bearings and electrical components must be encapsulated against ingress of water, that the equipment is very exposed to corrosion and fouling, that the equipment will be difficult to access and inspection must be done using divers or ROV, that the equipment must be brought to the surface for many types of repairs and that it is limited as to where the power plant can be placed with regard to bottom conditions and depth.

If the drum is placed ashore the disadvantages will primarily be that the power plant must be located in the coastal zone and therefore there are very limited opportunities for placement, that the wire which extends up from the sea will be an obstacle to boat traffic and traffic along the coastal zone. The wire, which necessarily must extend at an angle up from the sea, will also be very susceptible to damage from both boat traffic and flotsam. Furthermore, a power plant in the coastal zone will easily come into conflict with conservationists and nature lovers.

W02005/054668 describes a wave power plant in which a buoy has two drums adapted to wind up one wire each. The wires extend downward from the drums to a common weight plate. It is described that the movement of the buoy relative to the weight plate is transformed into electrical energy by a generator. It is described a recovery device including a coil spring that is capable of storing energy during ascent of the buoy and release the stored energy when the floating body is descending. It is also stated that continuous transmission of electrical energy is ensured by "means of power electronics technology". However, the means to ensure continuous transmission is not described.

From the description of this reference it is evident that the spring of the recovery device has as its purpose to wind up the wire when the buoy descends. However, it is also evident that the all the energy in the spring is used to wind up the wire. This means that either the amount of energy stored must be equal to the amount of energy needed to wind up the wire or that the surplus energy stored will not be utilized.

Moreover, the reference describes only a mechanical device (spring) for storing the electric energy. With a mechanical device for storing energy it is not feasible to use some of the stored energy for electrical supply. It is therefore not clear how continuous transmission of electrical energy can be ensured.

US 3567953 shows a tidal power plant comprising a rigid structure extending from the seabed to above sea level. A cable extends from the seabed to the part of the structure above the sea level. In between the end points, the cable is wound around a drum. The drum is situated on a float, which is adapted to move along the cable. While the float is moving the drum is rotated by the interaction with the cable.

The major drawback of this device is that it is limited to very shallow waters. This is most likely the reason that the power plant is for extracting energy from tides and not waves. Moreover the structure is very large and heavy and it has to be installed by performing a great extend of underwater excavation to anchor the structure firmly in the seabed.

The reference comprises a flywheel is situated on a brake coupled to the generator. The purpose of the brake (and hence the flywheel) is to slow down the generator. Here it has to be taken into account that the tidal movement of the buoy is very slow with a period of half a day. Wave induced motion has a period of a few seconds.

EP 1342916 describes a buoy where a chain is wound onto and off two drums. A pneumatic pressure is transmitted to an accumulator on shore. It is not clear how the chain is wound onto the drum when the buoy is moving downwards. The reference fails to explain intermediate storage of energy when the buoy is moving upward and that can be used to wind up the chain when the buoy is moving downward.

US 2008/217921 describes a system where both the winch and the generators are under water. This has obviously a great disadvantage since the components have to be in a watertight compartment and are not easily accessible for maintenance. The reference states that placing the equipment under water is deliberate to avoid the dangerous wave zone at the surface. This means that D4 teaches away from the present invention where the equipment is placed on the buoy.

Although the reference briefly mentions a rewind system for the drum, this is not described in any detail. It is certainly not described any system by which surplus stored energy can be transferred to the generator during wind-up.

W02010/044674 has entered the European phase as EP2347120. However, since this reference was published after the priority date of the present application, it is only pertinent with regard to novelty. In this reference the rotational energy of the drum is first converted into hydraulic pressure and then converted into mechanical energy again to rotate the generator.

WO2010/044675 has also entered the European phase, as EP2347121, and is as WO2010/044674 only pertinent with regard to novelty. The reference does not describe an electric or hydraulic spring that stores a part of the rotational energy from the drum and feeds this energy back to wind up the wire. The reference describes a "self-tightening functionality" powered by mechanical, hydraulic or electric means. However, it is not described where this energy is taken from.

U.S. 4,355,511, U.S. 4,931,662, U.S. 4,742,241, U.S. 4,453,894 and GB 2043790 describe other types of wave power plants.

The present invention has as an aim to provide a wave power plant which is robust, easy to maintain, reliable and operates at a steady efficiency over a wide range of wave conditions, i.e. wave frequency, wave amplitude and wave form, and also tidal level.

In addition, one aims to provide a wave power plant that has a minimum of moving parts under water. Furthermore, the present invention has a further aim that it should be possible to move around on board and carry out maintenance on board the wave power plant during operation. It is also an aim that it is possible to place it at locations where it will, to the smallest extent possible, be in the way of traffic on the water, fishing and other activities.

This is achieved by a wave power plant having the novel features of the characterizing portion of the subsequent claim 1.

The floating body is preferably formed so that the systems that need inspection and periodic maintenance are easily accessible from the top deck of the floating body. To simplify the maintenance, the drum can ease the tension from the pulling element and mechanical parts can be locked.

The invention shall now be explained in more detail with reference to a preferred example of an embodiment where:
Figure 1 shows a wave power plant according to the invention,
Figure 2 shows a section of the floating body in the wave power plant,
Figure 3 shows a section through the floating body and energy transmission device,
Figure 4 shows the energy transmission device in detail,
Figure 5 shows in perspective a section through the energy transmission device and
Figure 6 shows a schematic diagram of the hydro-electric system.

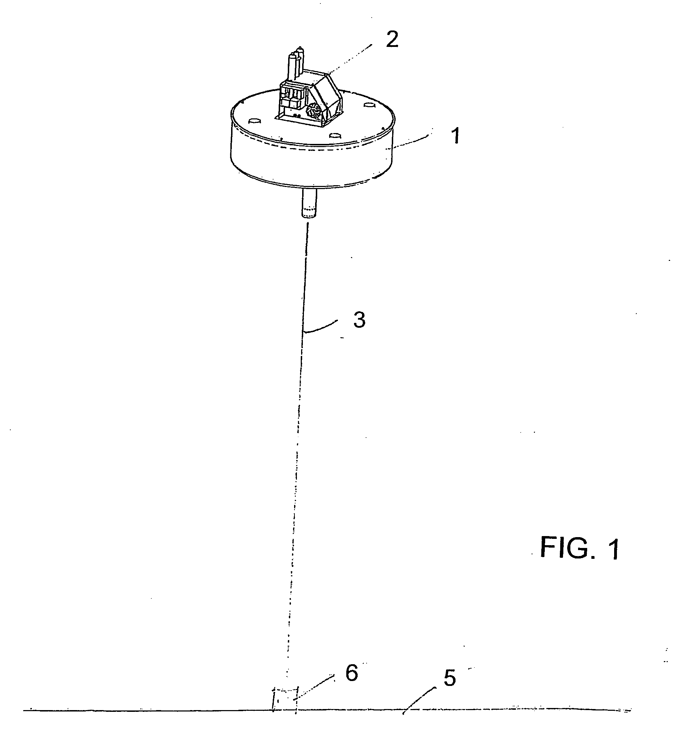

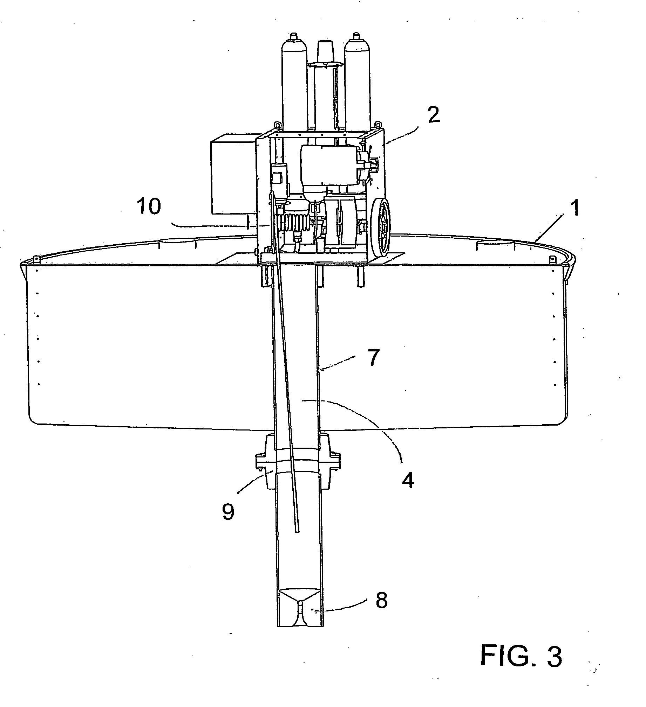

Figure 1 shows a preferred embodiment of the wave power plant according to the invention. It comprises a floating body 1. The floating body 1 is, in this case, a circular hollow body with an essentially flat underside and top side. As it is circular, it will be independent of the direction of the waves. The body 1 has a significantly greater extension in width than in height. An energy transmission device 2 is arranged on the top side of the body 1. From the device, a pulling element extends in the form of, preferably, a rope 3, through a channel 4 (see Figure 3) in the body 1. Instead of a rope, a cord, a wire or other elongated objects can be used. The rope 3 is secured to the seabed 5 with the help of an anchorage mooring 6. The anchorage can be a clump anchor, for example, a concrete block, a suction anchor, a bolt or other appropriate anchorage which is capable of taking up the forces which the wave power plant exerts.

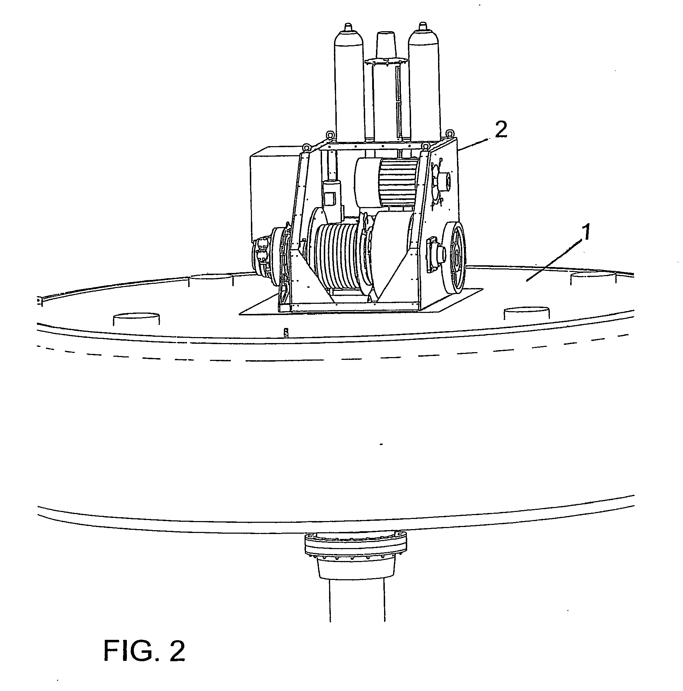

Figure 2 shows a section of the floating body 1 with the energy transmission device 2. The energy transmission device 2, which will be explained in more detail below, is located on the top side of the floating body 1 where a fixed deck is constructed. The energy transmission device is covered, but in the figures some of the covers are removed to display the individual components.

Figure 3 shows a section of the floating body 1 with the energy transmission device 2. A pipe 7, which defines a channel 4 through the floating body 1 from the top side to the underside, extends through the floating body 1. The pipe 4 extends some distance below the underside of the floating body 1 and is, at the bottom, fitted with a strain relief 8 In the embodiment example shown, the pipe 7 is divided into two parts for transport reasons and the two parts are connected together with the help of a connection 9.

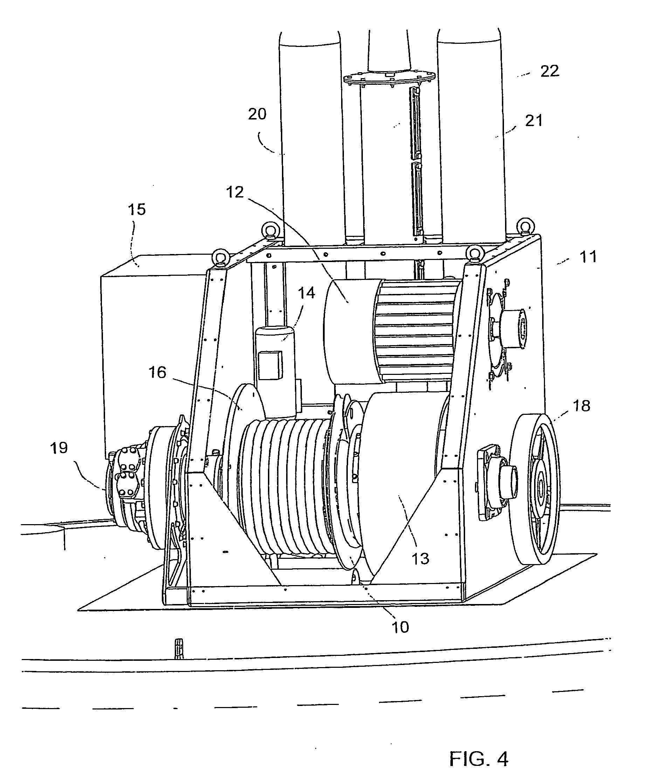

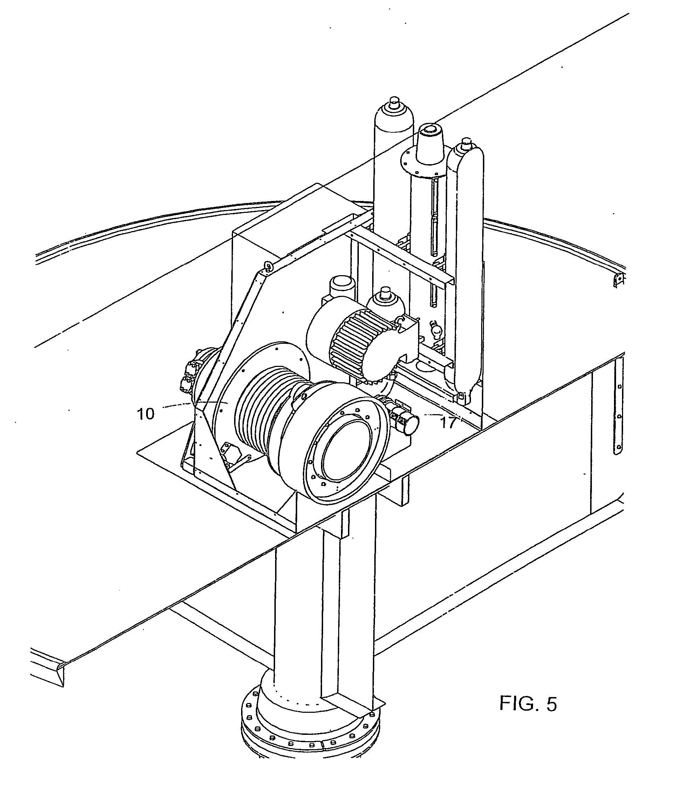

The rope 3 extends through the pipe 7 and the strain relief 8. At its upper end, the rope 3 extends a number of times around a drum 10 (this is best shown in the figures 4 and 5) and is attached to the drum 10 at its upper end. As mentioned above the rope 3 stretches down to the seabed at its other and lower end. The pipe 4 leads the rope 3 and ensures that it is properly spooled onto the drum 10 without the rope crossing itself. The pipe 4 also reinforces the floating body hydrodynamically and reduces the rolling and pitching. The number of turns of the rope on drum 10 is dependent on the ebb and flow as well as the expected wave height. The rope capacity of the drum 10 is dimensioned so that the drum does not go into an end stop under any wave conditions combined with tidal conditions, which can occur at the appropriate place the buoy is being placed.

Figure 4 shows the energy transmission device in detail. It comprises a housing 11 where the aforementioned drum 10 is located. The housing 11 also contains a generator 12, a transmission 13 and a hydraulic pump 14. A cabinet 15 for electrical control components is also built on. The drum 10 is equipped with a brake disc 16, which is used to lock the system during unexpected interruptions in operation, to prevent the rope running out because of the wave movements, and also to keep the drum in a stationary position during repair and maintenance work. In addition to the brake, a security lock that is attached to a hole in the brake disc 16, can also be arranged.

The transmission 13 is in a rotary connection via drive belts (not shown) with a shaft 17 (see Figure 5). This shaft is equipped with a belt wheel 18 (see Figure 4), which in turn is rotary connected with a belt wheel 23 on the shaft of the electric generator 12 via drive belts (not shown). In this way, a rotation of the drum 10 is transferred to the generator 12 and at the same time the change in the transmission 13 and shaft 17 and further to the generator 12 will ensure that the relatively slow rotation of the drum 10 is translated to a rapid rotation of the generator, which is adapted to the optimal operating revolutions of the generator. The transmission 13 is designed so that it only transmits the rotation of the drum 10 in one direction.

A hydraulic machine 19 is at the one end of the drum 10. It is rotary connected with the drum 10. The hydraulic spring is connected to a hydraulic pump 14, a high pressure accumulator 20 and a low pressure accumulator 21, and also a tank 22 for hydraulic oil. Together with these components the hydraulic machine 19 functions as a hydraulic spring, and this function will now be explained in the following. The hydraulic machine 19 is preferably rigidly connected to the drum 10 and can transfer torque through this. The hydraulic machine 19 will alternately work as a pump and as a motor, as will be explained below.

The function of the energy transmission device shall now be explained in more detail.

When the floating body moves upwards as a result of a wave crest passing, the rope 3 is subjected to a strain. This means that the drum 10 is forced to rotate to feed out wire 3. The torque is transferred in part to the transmission 13 and further to the generator 12. In this way an electric current is produced. One part of the torque from the drum will be transferred to the hydraulic machine19. This translates rotation to a hydraulic pressure in the high pressure accumulator 20, by pumping oil from the low pressure accumulator 21. The distribution of torque between transfer to the generator 12 and to storage can appropriately be 50/50.

When the floating body moves down into a trough of a wave, there will be a need to rewind the rope 3 onto the drum again. When the rope goes slack due to the floating body 1 moving down, oil is released from the high pressure accumulator 20 and oil at high pressure passes through the hydraulic machine 19 to the low pressure accumulator 21. The hydraulic machine 19 transmits torque to the drum 10. A smaller part of torque is used to spool the rope 3 onto the drum 10 again. However, the largest part of the torque is transferred further from the drum 10 to the transmission 13. From the transmission, the torque is transferred further to the electric generator 12. This means that the generator 12 is operated and produces energy both when the floating body 1 moves up and down.

Instead of using the hydraulic oil, the hydraulic machine can also be pneumatic.

In a preferred embodiment, the hydraulic machine 19 transfers the rotary energy through the drum 10. The transmission 13 can be designed so that it converts rotation in opposite directions to a rotation in the same direction. Alternatively, a rectification of the alternating current out from the generator 12 can be carried out.

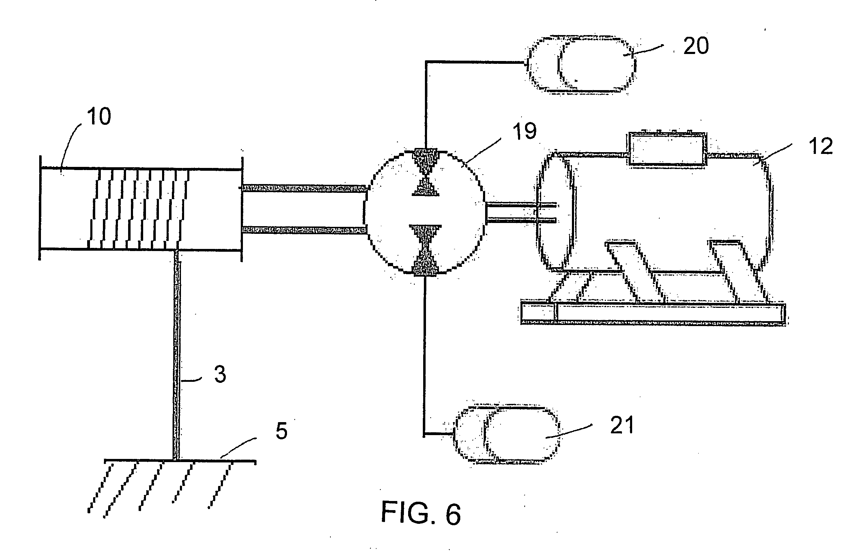

Figure 6 shows schematically how the components in principle are intertwined. Here the electric generator is placed in direct rotary connection with the hydraulic machine 19, something which is also possible.

In an alternative embodiment a drive shaft (which can not be seen in the figures) extends from the hydraulic machine through the drum 10 and to the transmission 13. This shaft is not drive connected with the drum 10. When the buoy moves down, the hydraulic machine will transfer most of the torque via the shaft (not shown) which extends through drum 10, while a smaller part of the torque is transferred to the drum 10 for coiling in the rope 3.

If one uses such a shaft that extends through the drum it is also possible to control the hydraulic machine 19 so that it delivers torque to the generator while the floating body changes direction of movement and in such a way that the electric generator is supplied a relatively constant torque at constant wave motions. Alternatively, the transmission 13 can be replaced by a hydraulic motor which acts as a flywheel in that a not constant rotation is transformed to an almost constant rotation. The system can also, in other ways, be fitted with a swinging mass that works to smooth out the rotation. The swinging mass is preferably a rotating mass that is connected to the drum 10 via a transmission and provides the floating body 1 with a natural phase shift relative to the wave. In some cases, the belt wheel 18 and the belt wheel 23 will provide adequate swinging mass, but if there is a need to increase this, a swing wheel can be arranged on the housing 11 next to the belt wheel 23, which is rotary connected to the belt wheel 23 via a belt. The transmission of the rotational speed means that belt wheel 23, and possibly the extra flywheel, rotate relatively quickly and they will therefore help to equalize the rotational speed, although they have a relatively low mass.

In addition, the system can be fitted with a frequency converter connected to the electric generator to amplify the natural inertia in the system so that a further phase shift of the rotation is achieved in relation to the wave movements.

Instead of a hydraulic spring an electric spring can also be used, in that a combined electric generator and electric motor are rotary connected to the drum 10 to alternately provide power to, for example, a battery, capacitor or to the net and alternately uses power from the battery or the net to spool up the rope 3 again.

It is also possible to use a mechanical spring that is under strain when the rope 3 is being spooled out and spools the wire up again when the drum is no longer exposed to forces from the rope 3.

The drum is rotary connected to the electric generator 10. Parts of the produced pressure can also bypass the accumulators and be used to drive a hydraulic motor with an electric generator. This will ensure a smooth operation of the production of electric power independent of wave motion.

Pressure generators, for example, a windmill, which can secure power to a leakage pump that pumps hydraulically to the hydraulic machine. Surplus energy from this can be used to generate electricity, which is taken via the electric generator.

The floating body can be a ship or a barge. Ships can produce electricity while they are anchored. The device can be used for dampening of the movement of ships, for example, drilling or production vessels.

Frequency converters and flywheels help to regulate the dampening force to create phase shifts with the waves and thereby optimize the power supply to the generator.

## Claims

1. Wave power plant comprising a floating body (1) which is set up to move under the influence of waves, and an energy-absorbing device (2), where the energy-absorbing device (2) includes a drum (10) which is adapted to receive an elongate pulling element (3), said pulling element (3) being arranged to rotate the drum (10) when the floating body (1) moves as a result of wave motion, the drum (10) being mounted on the floating body (1) and follows its movement, and the pulling element (3) at its end opposite of the drum (10) is connected to a fixed point, such as, for example, the seabed, the drum (10) being mechanically coupled to an electrical generator (12), the drum also being coupled to a hydraulic or electric spring (19) which comprises a hydraulic or electric machine for conversion of torque from the drum (19) to hydraulic pressure or electrical current and vice versa and also at least one accumulator (21, 22) for storage of hydraulic pressure or electrical energy, the hydraulic or electric spring (19) being arranged to take up a part of the torque from the drum (10) and transfer the energy to the accumulator (20, 21) for storage when the floating body (1) moves in a first direction and at least a portion of this stored energy is supplied to the electric generator (12) when the floating body (1) moves in another direction, **characterised in that** the drum (10) is rotary connected to a swinging mass that works to smooth out the rotation, the swinging mass being a rotating mass that is connected to the drum (10) via a transmission, and that the rotating mass is adapted to give the floating body (1) a natural phase shift in relation to the wave, and that a frequency converter is connected to the electric generator (12) to amplify the natural inertia in the system so that it achieves a further phase shift of the rotation in relation to the wave motions.

2. Wave power plant according to claim 1,
**characterised in that** the floating body (1) is equipped with a through going channel (4) through which the pulling element (3) extends.

3. Wave power plant according to claim 2, **characterised in that** the channel (4) is enclosed by a tube (7) which extends some distance below the underside of the floating body (1), and that the lower end of the tube (7) is fitted with a strain relief (8) for the pulling element (3).

## Patentansprüche

1. Wellenkraftwerk umfassend einem Schwimmkörper (1), welcher angeordnet ist, sich unten dem Einfluß vorn Wellen zu bewegen, and eine energieabsorbierenden Vorrichtung (2), wobei die energieabsorbierende Vorrichtung (2) eine Seiltrommel (10) enthält, welche angepasst ist, ein längliches Zugelement (3) aufzunehmen, wobei genanntes Zugelement (3) angeordnet ist, die Seiltrommel (10) zu rotieren, wenn der Schwimmkörper (1) sich infolge von Wellenbewegung bewegt, wobei die Seiltrommel (10) auf dem Schwimmkörper (1) montiert ist und seiner Bewegung folgt, und das Zugelement (3) an seinem Ende gegenüber der Seiltrommel (10) mit einem festen Punkt, wie zum Bespiel dem Meeresboden, verbunden ist, wobei die Seiltrommel (10) mechanisch mit einem elektrischen Generator (12) gekoppelt ist, wobei die Seiltrommel auch mit einer hydraulischen oder elektrischen Feder (19) gekoppelt ist, welche seine hydraulisch oder elektrische Maschine, für Umwandlung von Drehmoment von der Seiltrommel (10) zu hydraulischem Druck oder elektrischem Strom und umgekehrt, umfasst, und auch zumindest einen Akkumulator (21, 22) zum Speichern von hydraulischem Druck oder elektrischer Energie, wobei die hydraulische oder elektrische Feder (19) angeordnet ist, einen Teil des Drehmoments von der Seiltrommel (10) aufzunehmen und die Energie zum Speichern an den Akkumulator (20, 21) zu übertragen, wenn sich der Schwimmkörper (1) in eine erste Richtung bewegt und zumindest ein Teil dieser gespeicherten Energie dem elektrischem Generator (12) zugeführt wird, wenn sich der Schwimmkörper (1) in eine andere Richtung bewegt, **dadurch gekennzeichnet, dass** die Seiltrommel (10) rotierbar mit einer Schwungmasse verbunden ist, welche funktioniert, die Rotation zu glätten, wobei die Schwungmasse eine rotierende Masse ist, welche mit der Seiltrommel (10) mittels eines Getriebes verbunden ist, und dass die rotierende Masse angepasst ist, dem Schwimmkörper (1) eine natürliche Phasenverschiebung bezogen auf die Welle zu geben, und dass ein Frequenzumrichter mit dem elektrischen Generator (12) verbunden ist, um die natürliche Trägheit im System zu verstärken, sodass es eine weitere Phasenverschiebung der Rotation gezogen auf die Wellenbewegungen ausführt.

2. Wellenkraftwerk nach Anspruch 1, **dadurch gekennzeichnet, dass** der Schwimmkörper (1) mit einem durchgehenden Kanal (4) ausgestattet ist, durch welchen sich das Zugelement (3) erstreckt.

3. Wellenkraftwerk nach Anspruch 2, **dadurch gekennzeichnet, dass** der Kanal (4) durch ein Rohr (7) geschlossen ist, welches sich in einigem Abstand unterhalb der Unterseite des Schwimmkörpers (1) erstreckt, und dass das untere Ende des Rohrs (7) mit einer Zugentlastung (8) für das Zugelement (3) ausgerüstet ist.

## Revendications

1. Centrale houlomotrice comprenant un corps flottant (1) qui est établi pour se déplacer sous l'influence des vagues, et un dispositif d'absorption d'énergie (2), où le dispositif d'absorption d'énergie (2) comprend un tambour (10) qui est adapté pour recevoir un élément de traction allongé (3), l'élément de traction (3) étant agencé pour mettre en rotation le tambour (10) lorsque le corps flottant se déplace en résultat d'un mouvement de vague, le tambour (10) étant monté sur le corps flottant (1) et suivant son déplacement, et l'élément de traction (3) à son extrémité opposée par rapport au tambour (10) est raccordé à un point fixé, tel que, par exemple, le fonds de la mer, le tambour (10) étant relié mécaniquement à un générateur électrique (12), le tambour étant aussi relié à un ressort hydraulique ou électrique (19) qui comprend une machine hydraulique ou électrique pour conversion d'un couple provenant du tambour (19) en pression hydraulique ou courant électrique et vice versa et également à au moins un accumulateur (21, 22) pour le stockage d'une pression hydraulique ou d'une énergie électrique, le ressort hydraulique ou électrique (19) étant agencé pour prélever une partie du couple provenant du tambour (10) et transférer l'énergie vers l'accumulateur (20, 21) pour stockage lorsque le corps flottant (1) se déplace dans une première direction et au moins une partie de cette énergie stockée est envoyée au générateur électrique (12) lorsque le corps flottant (1) se déplace dans une autre direction, **caractérisée en ce que** le tambour (10) est relié de manière rotative à une masse oscillante qui agit pour adoucir la rotation, la masse oscillante étant une masse tournante qui est reliée au tambour (10) par l'intermédiaire d'une transmission, et **en ce que** la masse tournante est adaptée pour donner au corps flottant (1) un déphasage naturel par rapport à la vague et **en ce qu'**un convertisseur de fréquence est relié au générateur électrique (12) pour amplifier l'inertie naturelle du système de sorte qu'il aboutisse à un déphasage supplémentaire de la rotation par rapport aux mouvements de la vague.

2. Centrale houlomotrice selon la revendication 1,
**caractérisée en ce que** le corps flottant (1) est muni d'un canal traversant (4) à travers lequel s'étend l'élément de traction (3).

3. Centrale houlomotrice selon la revendication 2, **caractérisée en ce que** le canal (4) est entouré par un tube (7) qui s'étend sur une certaine distance en dessous du côté inférieur du corps flottant (1), et **en ce que** l'extrémité inférieure du tube (7) est munie d'un dispositif de relâchement des contraintes (8) pour l'élément de traction (3).
